Europäisches Patentamt

(19) European Patent Office

Office européen des brevets

(11) Publication number: 0 282 037
A2

(12) EUROPEAN PATENT APPLICATION

(21) Application number: 88103728.7

(51) Int. Cl.⁴: C01B 33/02

(22) Date of filing: 09.03.88

(30) Priority: 11.03.87 JP 54197/87

(43) Date of publication of application:
14.09.88 Bulletin 88/37

(84) Designated Contracting States:
DE FR GB NL

(71) Applicant: MITSUBISHI KINZOKU KABUSHIKI
KAISHA
5-2, Otemachi 1-chome
Chiyoda-ku Tokyo 100(JP)

(72) Inventor: Ikeda, Hiroshi
Hikawaryo, 279 Oaza Niitsutsumi
Omiya-shiSSaitama-ken(JP)
Inventor: Tsunashima, Makoto
16-12 Minamishinagawa 2-chome
Shinagawa-ku
Tokyo(JP)

(74) Representative: von Füner, Alexander, Dr. et al
Patentanwälte v. Füner, Ebbinghaus, Finck
Mariahilfplatz 2 & 3
D-8000 München 90(DE)

(54) Process for preparing high purity polycrystalline silicon.

(57) Polycrystalline silicon having a purity not lower than 99.9999% is produced by decomposition of polychloropolysilane which can be easily purified by distillation.

## Process for preparing high purity polycrystalline silicon

Field of the Invention

This invention relates to a process for preparing high purity polcrystalline silicon.

Background of the Invention

High purity metallic silicon has conventionally been produced by reduction of silicon tetrachloride with zinc, thermal decomposition of trichlorosilane, etc.

In the process wherein a reducing agent is used, contamination with the used reducing agent is unavoidable, and the thermal decomposition of trichlorosilane requires a high temperature not lower than 1,000°C and is disadvantageous in production cost.

Therefore, a new process using no reducing agent and enabling the reaction to be conducted at a lower temperature has been desired for producing high purity silicon at low cost.

We have noted that chloropolysilanes are available with higher purity and the chloropolysilanes decompose at lower temperatures . Thus we completed this invention.

Summary of the Invention

This invention provides a process for preparing high purity polycrystalline silicon comprising thermally decomposing chloropolysilane represented by the formula $Si_nCl_{2n+2}$, wherein $4 \geq n \geq 2$, at a temperature not lower than 700°C in the presence of a seed silicon crystal.

Chloropolysilanes are compounds represented by the above chemical formula which are not specifically limited. Practically employable compounds are hexachlorodisilane, octachlorotrisilane, and decachlorotetrasilane. These compounds can easily be purified to a purity not lower than 99.9999% by distillation.

Chloropolysilanes do not decompose at temperatures below 700°C. Temperatures over 1000°C are not economical and meaningless for the invention because even trichlorosilane decomposes at these temperatures.

The process of the present invention can be easily carried out by contacting a chloropolysilane with a crystallization seed, a silicon wire for instance, at the decomposition temperature of the employed chloropolysilane.

In the present invention, it is preferred to control the reaction rate by diluting the chloropolysilane with an inert gas such as argon, helium, etc.

The feature of the present invention is that silicon of very high purity is economically obtained by employment of high purity chloropolysilane which is readily available.

Specific Disclosure of the Invention

The invention will now be specifically described by way of working examples.

Example 1

In a reaction vessel made of 18-8 stainless steel having a capacity of 1m³, in which a silicon wire was installed and heated to 750°C, a mixture of 99.9999% pure hexachlorodisilane (0.01 g/min) and 99.999% pure argon (0.18 g/min) was blow in for 100 hours. The unreacted hexachlorodisilane was collected in a sodium hydroxide solution and argon was recovered. On the wire, 15.2 g of silicon was deposited. It was found by the activation analysis and atomic absorption analysis that the deposited silicon was 99.99994% pure.

Examples 2-3 and Comparative Example 1

The procedure of Example 1 was repeated with varied wire temperature. The results are shown in Table 1.

### Table 1

| | Wire temp. | Si deposited | Si purity |
|---|---|---|---|
| Comparative Ex. 1 | 200℃ | 0.1 g | 99.9999% |
| Example 2 | 750℃ | 13.9 g | 99.9999% |
| Example 3 | 950℃ | 17.7 g | 99.99999% |

Examples 4-6

The procedure of Example 1 was repeated with the purity and flow rate of the hexachlorodisilane varied. The results are shown in Table 2.

### Table 2

| | $Si_2Cl_6$ (%) | Flow rate (g/min) | Si deposited (g) | Si purity (%) |
|---|---|---|---|---|
| Example 4 | 96.1 | 0.01 | 14.6 | 97.7% |
| Example 5 | 99.9999 | 0.83 | 901.2 | 99.9999% |
| Example 6 | 99.99999 | 0.27 | 298.4 | 99.99999% |

Example 7

The procedure of Example 1 was repeated using octachlorotrisilane instead of hexachlorodisilane with the flow rate varied. The results are shown in Table 3.

Example 8

The procedure of Example 1 was repeated using decachlorotetrasilane instead of hexachlorodisilane with the flow rate varied. The results are shown in Table 3.

### Table 3

| | Chloropolysilane | Purity (%) | Flow rate (g/min) | Si deposited (g) | Si purity (%) |
|---|---|---|---|---|---|
| Example 7 | $Si_3Cl_8$ | 99.9999 | 0.71 | 1156.2 | 99.9999 |
| Example 8 | $Si_4Cl_{10}$ | 99.9999 | 0.65 | 1270.1 | 99.9999 |

## Claims

1. A process for preparing high purity polycrystalline silicon comprising thermally decomposing chloropolysilane ($Si_nCl_{2n+2}$, $4\geq n\geq 2$) at a temprature not lower than 700°C in the presence of a seed silicon crystal.

2. A process as set forth in Claim 1, wherein the polychloropolysilane of a purity not lower than 99.9999% by weight is used.

3. A process as set forth in Claim 1, wherein the polychloropolysilane is diluted with an inert gas.

4. A process as set forth in Claim 3, wherein the inert gas is argon.

5. A process as set forth in Claim 1, wherein the used polychloropolysilane is hexachlosodisilane.

6. A process as set forth in Claim 1, wherein the used polychloropolysilane is octachlosotetrasilane.

7 Polycrystalline silicon having a purity not lower than 99.9999% prepared by the process described in any of the above claims.